Europäisches Patentamt

European Patent Office

Office européen des brevets

(11) Numéro de publication: **0 222 655**
**A1**

# (12) DEMANDE DE BREVET EUROPEEN

(21) Numéro de dépôt: 86402363.5

(22) Date de dépôt: 22.10.86

(51) Int. Cl.⁴: **G 01 D 5/34**
**G 01 D 5/26**

(30) Priorité: 29.10.85 FR 8516053

(43) Date de publication de la demande:
20.05.87 Bulletin 87/21

(84) Etats contractants désignés:
AT BE CH DE ES GB IT LI LU NL SE

(71) Demandeur: M.C.B.
11, rue Pierre Lhomme
F-92404 Courbevole (FR)

(72) Inventeur: **Taillebois, Jacques**
**Résidence Brigitte 23 rue Ebisoires**
**F-78370 Plaisir (FR)**

**Perrot, Jean-Claude**
**8 Allée des Primevères**
**F-95370 Montigny Les Cormeilles (FR)**

**Gambs, Paul**
**132 Chemin du Petit Bois**
**F-69130 Eculiy (FR)**

**Renaud, Jean-Marie**
**17 rue Pierre Brossolette**
**F-92400 Courbevole (FR)**

(74) Mandataire: **Lecca, Jean et al**
**CABINET PLASSERAUD 84, rue d'Amsterdam**
**F-75009 Paris (FR)**

(54) **Codeur optique analogique de repérage de position.**

(57) Le codeur comporte: un élément (1) avec une bande (2) dont la transparence est complète vis-à-vis de deux longueurs d'onde $l_1$ et $l_2$ mais varie en fonction de la distance, angulaire ou linéaire, pour une troisième longueur d'onde $l_3$ comprise entre $l_1$ et $l_2$; des moyens émetteurs de lumière $3_1, 3_2, 3_3$ émettant trois faisceaux de lumière $7_1, 7_2, 7_3$ aux longueurs d'onde $l_1, l_2, l_3$; un premier coupleur optique (5,6) mélangeant les faisceaux $7_1, 7_2, 7_3$; des moyens (B) de transmission optique bi-directionnelle à fibre(s) optique(s); un second coupleur optique (18,19) divisant en trois faisceaux $20_1, 20_2, 20'_3$ la lumière sortant des moyens (B) après renvoi dans l'élément optique (13) et passage à travers la bande (2); trois lecteurs $23_1, 23_2, 23_3$ sensibles à $l_1, l_2$ et $l_3$; et une unité électronique (25) connectée à $23_1, 23_2, 23_3$ et déterminant le rapport entre la moyenne des réponses de $23_1$ et de $23_2$ et la réponse de $23_3$.

FIG.2.

**Description**

"CODEUR OPTIQUE ANALOGIQUE DE REPERAGE DE POSITION"

La présente invention concerne les codeurs optiques de repérage, par diascopie, de la position d'un élément mobile.

On connaît tout d'abord des codeurs optiques de repérage de position du type numérique et on sait qu'un codeur de ce type comprend, d'une part, un disque ou une réglette comportant plusieurs pistes, chacune avec une succession de zones opaques et de zones transparentes fines alternantes et, d'autre part, un ensemble de lecture comportant, entre autres, une source de lumière et un ou plusieurs photodétecteurs qui détectent pour chaque piste si c'est une zone opaque ou une zone transparente qui est présente devant le ou les photodétecteurs; le disque ou la réglette, d'une part, et l'ensemble de lecture, d'autre part, sont mobiles l'un par rapport à l'autre soit en rotation (cas du disque), soit en translation (cas de la réglette). De plus au(x) photodétecteur(s) peut être associée une unité électronique de traitement des signaux émis par le(s) photodétecteur(s).

La présente invention concerne au contraire les codeurs optiques de repérage de position du type analogique, dans lesquels le disque ou réglette comporte non pas plusieurs pistes chacune avec une succession de zones opaques et de zones transparentes fines alternantes, mais une bande circulaire ou linéaire dans laquelle la transparence, vis-à-vis d'une longueur d'onde bien déterminée, varie en fonction de la position angulaire ou linéaire à partir d'une origine, tandis que la lecture s'effectue au moyen d'un ou plusieurs photodétecteurs qui détectent l'intensité de la lumière transmise ou réfléchie par une zone de cette bande en regard de celui-ci ou ceux-ci.

L'ensemble des moyens précités d'un codeur optique, de type digital ou analogique, se trouve disposé dans un volume réduit, ou bien, lorsque ces moyens sont éloignés les uns des autres, des conducteurs assurent les liaisons électriques, notamment entre les moyens d'alimentation en énergie, le système opto-électronique constituant ensemble de lecture et l'unité électronique de traitement des signaux.

Dans certaines applications il existe une distance non négligeable entre l'ensemble de lecture et l'unité électronique de traitement des signaux. Il y a lieu d'éviter toute liaison électrique entre ces deux ensembles du fait qu'une telle liaison risquerait d'être perturbée par des parasites, notamment en cas de transmission analogique des signaux entre l'ensemble de lecture et l'unité électronique de traitement des signaux.

La présente invention vise à permettre de réaliser un codeur optique analogique de repérage par diascopie, c'est-à-dire par transparence, de la position d'un élément mobile éloigné de l'unité électronique de traitement des signaux qui représentent cette position, en évitant tout parasite.

Conformément à l'invention, on réalise un codeur de repérage de position du type analogique qui est constitué en trois parties, à savoir : un capteur de données qui coopère avec l'élément porteur du code de position; un module opto-électronique avec une unité électronique de traitement des signaux; et des moyens de transmission optique bi-directionnelle à fibre(s) optique(s) entre le capteur et le module; et qui est caractérisé en ce que :

- l'élément porteur de code comporte une bande dont la transparence est sensiblement complète vis-à-vis d'au moins une longueur d'onde, mais varie en fonction de la distance, angulaire ou linéaire, à partir d'une origine, pour une autre longueur d'onde;

- ledit module opto-électronique comprend : des moyens émetteurs opto-électroniques de lumière, aptes à émettre au moins deux faisceaux de lumière à ladite au moins une et à ladite autre longueurs d'onde; des moyens lecteurs opto-électroniques à filtres optiques, sensibles à ces longueurs d'onde et qui sont associés à l'unité de traitement électronique afin que celle-ci traite les signaux électriques émis par ces moyens lecteurs opto-électroniques; des moyens pour alimenter en énergie électrique lesdits moyens émetteurs opto-électroniques; deux coupleurs optiques, le premier coupleur permettant de mélanger les faisceaux de lumière émis par les moyens émetteurs opto-électroniques et de diriger l'ensemble des faisceaux vers la première extrémité des moyens de transmission optique bi-directionnelle à fibre(s) optique(s), tandis que le second coupleur permet de diviser en au moins deux faisceaux la lumière sortant par ladite première extrémité et de diriger ces faisceaux vers lesdits moyens lecteurs opto-électroniques.

- ledit capteur comprend un élément optique de renvoi, avec sa face d'entrée disposée du côté de l'élément porteur de code opposé à celui qui est dirigé vers la seconde extrémité des moyens de transmission optique bi-directionnelle à fibre(s) optique(s) et avec sa face de sortie dirigée vers ladite seconde face d'extrémité; et

- l'unité électronique de traitement des signaux calcule, pour chaque lecture de position, le rapport entre au moins une réponse desdits moyens lecteurs opto-électroniques pour ladite au moins une longueur d'onde et la réponse desdits moyens lecteurs opto-électroniques pour ladite autre longueur d'onde.

Avantageusement :

- ladite au moins une longueur d'onde comprend une première et une seconde longueurs d'ondes, ladite autre longueur d'onde étant comprise entre les première et seconde longueurs d'onde, en ce que les moyens émetteurs opto-électroniques de lumière émettent trois faisceaux de lumière aux trois longueurs d'onde précitées, en ce que le premier coupleur permet de mélanger ces trois faisceaux de lumière, en ce que le second coupleur permet de diviser en trois faisceaux la lumière sortant par ladite première extrémité et en ce que ladite unité électronique calcule, pour chaque lecture de position, le rapport entre la moyenne des réponses desdits moyens lecteurs opto-électroniques pour la première et la seconde longueur d'onde et la réponse desdits moyens lecteurs opto-électroniques pour ladite autre longueur d'onde;

- les moyens de transmission optique bi-directionnelle comprennent au moins deux fibres optiques distinctes, disposées la première pour transmettre la lumière depuis le premier coupleur optique vers l'élément porteur de code et la seconde pour transmettre la lumière depuis la face de sortie de l'élément optique de renvoi vers le second coupleur optique;

- le codeur comprend en outre un système optique opérant la conjugaison optique entre la face de sortie de la première fibre optique et la face d'entrée de la seconde fibre optique;

- les coupleurs optiques sont constitués chacun par deux miroirs semi-transparents possédant chacun, à l'inclinaison d'incidence choisie, une réflexion maximale pour l'une desdites trois longueurs d'onde - différente pour les deux miroirs - et une transmission maximale pour les deux autres desdites longueurs d'onde;

- le codeur comprend en outre trois condenseurs optiques disposés sur le trajet des trois faisceaux optiques entre les moyens émetteurs opto-électroniques et le premier coupleur optique pour que les deux miroirs de ce premier coupleur optique reçoivent ces trois faisceaux sous forme de rayons sensiblement parallèles;

- le codeur comprend en outre un système optique disposé entre la face de sortie des moyens de transmission optique bi-directionnelle et le second coupleur optique afin de focaliser la lumière en provenance de cette face de sortie pour que les deux miroirs de ce second coupleur reçoivent cette lumière sous forme de rayons sensiblement parallèles;

- lesdits moyens émetteurs opto-électroniques de lumière comprennent au moins deux émetteurs opto-électroniques émettant chacun un des faisceaux de lumière auxdites au moins une et autre longueurs d'onde précitées; ou bien lesdits moyens émetteurs opto-électroniques de lumière sont constitués par un unique émetteur opto-électronique de lumière émettant de la lumière dans une large bande de longueurs d'onde incluant lesdites au moins une et autre longueurs d'onde et au moins deux filtres optiques sélectionnant lesdites longueurs d'onde;

- lesdits moyens lecteurs opto-électroniques à filtres optiques comprennent au moins deux lecteurs opto-électroniques et au moins deux filtres optiques qui sélectionnent chacun une des longueurs d'onde, un de ces filtres étant disposé devant chacun des lecteurs opto-électroniques;

- le codeur comprend en outre un système optique disposé entre le premier coupleur optique et les moyens de transmission optique bi-directionnelle pour focaliser l'ensemble des faisceaux optiques envoyés par ce premier coupleur sur la première extrémité de ces moyens de transmission;

- le codeur comprend en outre un système optique disposé entre le second coupleur optique et les moyens lecteurs opto-électroniques pour focaliser les faisceaux de lumière sur lesdits moyens lecteurs opto-électroniques.

L'invention pourra, de toute façon, être bien comprise à l'aide du complément de description qui suit, ainsi que des dessins ci-annexés, lesquels complément et dessins sont, bien entendu, donnés surtout à titre d'indication.

La figure 1 illustre schématiquement l'ensemble du codeur optique de repérage de position doté des perfectionnements selon l'invention, en montrant ses trois unités constitutives, à savoir le capteur, les moyens optiques de transmission et le module.

La figure 2 représente les composants des trois unités illustrées sur la figure 1.

La figure 3, enfin, illustre la variation de l'absorption, portée en ordonnées, de la bande à transparence variable de l'élément porteur de code, en fonction de la longueur d'onde, portée en abscisses.

Selon l'invention et plus spécialement selon celui de ses modes d'application, ainsi que selon ceux des modes de réalisation de ses diverses parties, auxquels il semble qu'il y ait lieu d'accorder la préférence, se proposant, par exemple, de réaliser un codeur optique de repérage de position du type analogique, on s'y prend comme suit ou d'une manière analogue.

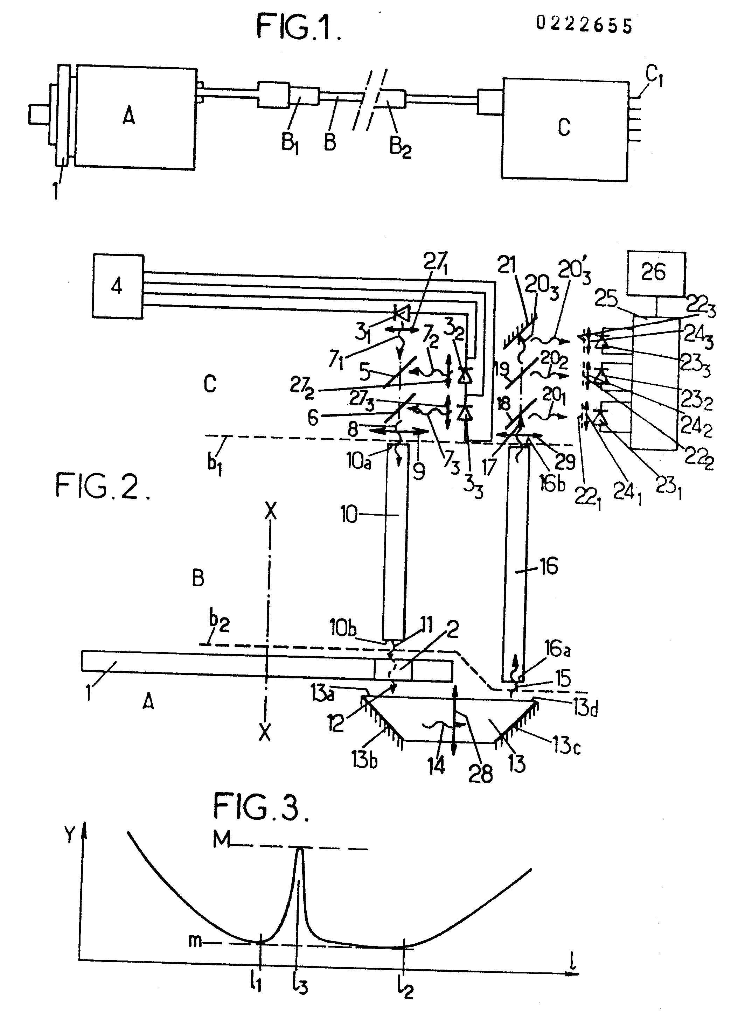

L'invention est décrite ci-après dans un mode de réalisation préféré, illustré sur les figures 1 et 2, s'appliquant au repérage d'une position angulaire, l'organe mobile autour de l'axe X-X portant, solidaire de lui en rotation, un disque codé 1 avec une bande 2, codée en analogique de la manière suivante : la transparence de cette bande 2 est sensiblement complète pour une première longueur d'onde $l_1$ et pour une deuxième longueur d'onde $l_2$, alors que sa transparence varie, pour une troisième longueur d'onde $l_3$ comprise entre $l_1$ et $l_2$, continuellement ou périodiquement, en fonction de la distance angulaire à partir d'une origine.

En se référant plus particulièrement à la figure 2, sur laquelle on a séparé par des traits interrompus le capteur A, le système de transmission optique B, à fibre(s) optique(s), constitué par exemple par un câble optique à une ou plusieurs fibres optiques, et le module opto-électronique C (ensembles A, B et C que l'on retrouve sur la figure 1), on voit que l'appareil selon l'invention comprend essentiellement :

- trois émetteurs opto-électroniques de lumière $3_1, 3_2, 3_3$ émettant de la lumière, de longueur d'onde respectivement $l_1, l_2$ et $l_3$, la longueur d'onde $l_3$ étant comprise entre $l_1$ et $l_2$, ces trois émetteurs opto-électroniques pouvant être constitués par exemple par des diodes électroluminescentes;

- une source d'alimentation 4 pour les trois émetteurs $3_1, 3_2$ et $3_3$;

- trois condenseurs optiques $27_1, 27_2, 27_3$ focalisés sur les émetteurs opto-électroniques $3_1, 3_2, 3_3$ pour en former une image projetée à l'infini et produire donc des faisceaux $7_1, 7_2, 7_3$ de rayons parallèles aux trois longueurs d'onde $l_1, l_2, l_3$;

- un premier coupleur optique, constitué par exemple par deux miroirs semi-transparents 5 et 6, le miroir 5 combinant les faisceaux optiques $7_1$, émis par l'émetteur $3_1$, et $7_2$, émis par l'émetteur $3_2$, tandis que le miroir 6 mélange à ces deux faisceaux le faisceau optique $7_3$ émis par l'émetteur $3_3$; il en résulte un faisceau optique 8 contenant les trois longueurs d'onde $l_1$, $l_2$ et $l_3$;

- un système optique 9 disposé en aval du premier coupleur optique à miroirs semi-transparents 5, 6, afin de focaliser le faisceau optique 8 sur la face d'entrée 10a d'une fibre optique (référencée ci-après) faisant partie des moyens B de transmission optique bi-directionnelle à fibre(s) optique(s) entre le capteur A et le module C;

- une première fibre optique 10 dont la face d'entrée 10a a été mentionnée ci-dessus et donc la face de sortie 10b dirige un faisceau optique transmis 11 (aux longueurs d'onde $l_1$, $l_2$ et $l_3$) sur la bande 2 du disque codé 1, le faisceau optique 12 sortant de cette bande 2; la lumière aux longueurs d'onde $l_1$ et $l_2$ n'est pratiquement pas absorbée par la traversée de la bande 2, alors que par contre la lumière à la longueur d'onde $l_3$ est absorbée suivant une loi analogique ou pseudo-analogique, l'absorption étant fonction de la distance angulaire entre la zone de la bande 2 traversée à cet instant par la lumière (faisceaux 11-12) et l'origine des distance angulaires;

- un élément optique de renvoi 13, dont la face d'entrée 13a est dirigée vers la bande 2, et qui comprend deux faces réfléchissantes 13b et 13c inclinées à 45° par rapport à l'axer XX, qui est aussi l'axe du faisceau lumineux 12, pour produire d'abord un faisceau 14 à l'intérieur de l'élément optique 13 et ensuite un faisceau 15 sortant par la face de sortie 13d;

- une seconde fibre optique 16, qui fait également partie des moyens B de transmission optique bidirectionnelle à fibre(s) optique(s) entre le capteur A et le module D, la face d'entrée 16a de cette fibre optique 16 recevant le faisceau 15, tandis que la face de sortie 16b de cette fibre est traversée par le faisceau transmis 17;

- un système optique 28 opérant la conjugaison optique entre la face de sortie 10b de la première fibre optique 10 et la face d'entrée 16a de la seconde fibre optique 16;

- un système optique 29 focalisé sur la face de sortie 16b de la fibre optique 16 pour produire donc un faisceau 17 de rayons parallèles à l'axe optique de la fibre 16;

- un second coupleur optique, constitué par exemple par deux miroirs semi-transparents 18 et 19, qui produit, à partir du faisceau 17 de rayons parallèles, trois faisceaux lumineux $20_1$, $20_2$ et $20_3$, ce dernier étant renvoyé par un miroir 21 en tant que faisceau $20'_3$;

- trois filtres optiques $22_1$, $22_2$ et $22_3$ disposés chacun sur le trajet d'un des faisceaux lumineux $20_1$, $20_2$ et $20'_3$ respectivement et ne laissant respectivement passer que les longueurs d'onde $l_1$, $l_2$ et $l_3$;

- trois lecteurs opto-électroniques $23_1$, $23_2$, $23_3$, sensibles respectivement aux trois longueurs d'onde $l_1$, $l_2$ et $l_3$;

- avantageusement trois systèmes optiques $24_1$, $24_2$, $24_3$ disposés devant chaque lecteur opto-électronique $23_1$, $23_2$ et $23_3$ respectivement, pour focaliser la lumière sur ces lecteurs;

- une unité électronique 25 de traitement des signaux qui calcule, pour chaque lecture de position, le rapport entre la moyenne des réponses des deux lecteurs opto-électroniques $23_1$ et $23_2$, devant lesquels sont placés les filtres optiques $22_1$ et $22_2$ sélectionnant les longueurs d'onde $l_1$ et $l_2$ respectivement, et la réponse du lecteur opto-élctronique $23_3$, devant lequel est placé le filtre $22_3$ qui sélectionne la longueur d'onde $l_3$; et

- une unité 26 alimentant en énergie électrique l'unité de traitement 25 (en pratique les unités d'alimentation en énergie électrique 4 et 26 sont rassemblées en une seule unité et ce n'est que pour clarifier le dessin qu'on les a séparées.

Suivant une variante, à la place des trois émetteurs opto-électroniques $3_1$, $3_2$, $3_3$ on pourrait prévoir un unique émetteur opto-électronique, qui émet un large faisceau dans une large bande de longueurs d'onde englobant les trois longueurs d'onde $l_1$, $l_2$ et $l_3$, et trois filtres sélectionnant les trois longueurs d'onde $l_1$, $l_2$ et $l_3$ dans l'émission de cet unique émetteur opto-électronique.

Suivant une autre variante, au lieu de prévoir deux fibres optiques distinctes 10 et 16, on pourrait prévoir une seule fibre optique dans les moyens B de transmission optique bi-directionnelle entre le capteur A et le module C, cette fibre unique transmettant la lumière dans les deux sens et coopérant avec

- des miroirs de renvoi qui permettraient de connecter optiquement la face $b_2$ des moyens B de transmission optique bi-directionnelle, d'une part, avec la bande 2 pour lui transmettre le faisceau 11 et, d'autre part, avec la face de sortie 13d de l'élément optique de renvoi 13 pour en recevoir le faisceau 15; et

- un coupleur optique bi-directionnel disposé pour connecter optiquement la face $b_1$ des moyens B de transmission optique bi-directionnelle, d'une part, avec ledit premier coupleur optique à miroirs semi-transparents 5,6 afin de transmettre le faisceau optique de sortie 8 de ce premier coupleur à cette face $b_1$ et, d'autre part, avec le second coupleur optique à miroirs semi-transparents 18,19 afin de transmettre à ce second coupleur le faisceau optique 17 sortant de cette face $b_1$.

Sur la figure 3 on a illustré la variation de l'absorption optique Y de la bande 2 en fonction de la longueur d'onde $l$ de la lumière (constituée par le faisceau 11 qui l'atteint), les trois longueurs d'onde particulières $l_1$, $l_2$ et $l_3$ dont se compose le faisceau 11 étant indiquées en abscisses et pouvant avoir respectivement les valeurs de 880, 1550 et 1300 nm.

Comme on le voit, l'absorption optique est très faible ou pratiquement nulle pour les longueurs d'onde $l_1$ et $l_2$ et elle est forte pour la longueur d'onde $l_3$; (on a représenté en $\underline{m}$ l'absorption minimale et en M l'absorption maximale); l'absorption varie en outre, pour cette longueur d'onde $l_3$, en fonction de la distance angulaire sur la bande circulaire 1 en fonction de la distance à une origine.

Dans ces conditions les longueurs d'onde $l_1$ et $l_2$ du faisceau 11 sont transmises pratiquement sans absorption par la bande 2, et donc les lecteurs $23_1$ et $23_2$ reçoivent une lumière dont l'intensité est indépendante de la position angulaire du disque codé 1 et de sa bande 2; au contraire le lecteur $23_3$ reçoit une lumière de longueur d'onde $l_3$ dont l'intensité est une fonction analogique ou pseudo-analogique de la distance angulaire de la position de lecture du disque 1, avec sa bande 2, par rapport à une origine.

L'unité 25 de traitement des signaux émis par les trois lecteurs $23_1,23_2$ et $23_3$ calcule, comme indiqué ci-dessus, le rapport entre, d'une part, la moyenne des réponses $i_1$ du lecteur $23_1$ et $i_2$ du lecteur $23_2$,et,d'autre part, la réponse $i_3$ du lecteur opto-électronique $23_3$, à savoir donc $(i_1+i_2)/2i_3$ ou inversement $2i_3/(i_1+i_2)$.

Il importe de noter que les fluctuations des pertes dans l'ensemble du système (variations de la source d'alimentation 4, pertes dans l'air et les fibres optiques depuis le miroir semi-transparent 6 jusqu'au miroir semi-transparent 18, ainsi que dans l'élément optique de renvoi 13, en exceptant bien entendu l'absorption dans la bande 2),pour les longueurs d'onde $l_1,l_2$ et $l_3$, disparaissent dans le rapport précité $(i_1 + i_2)/2i_3$ ou $2i_3/(i_1 + i_2)$.

La mise en oeuvre de trois longueurs d'onde, si elle exige de prévoir trois émetteurs et trois lecteurs opto-électroniques associés respectivement à un premier et à un second coupleur optique chacun à deux miroirs semi-transparents, permet par contre de déterminer la position angulaire du disque 1, indépendamment des fluctuations énumérées précédemment, ce qui assure l'exactitude de la mesure de la position angulaire du disque 1 indépendamment des fluctuations précitées dues à des variations de courant, de température ou de pression.

Sur la figure 1 on a représenté :
- les unités du capteur A avec le disque codé 1, du câble optique B constituant les moyens de transmission à fibre(s) optique(s) et du module C avec ses sorties $C_1$ vers les moyens d'utilisation des signaux de sortie du module C; et
- les connecteurs $B_1$ (à face $b_1$) et $B_2$ (à face $b_2$) du câble optique B, respectivement avec le capteur A et le module C.

Comme il va de soi et comme il résulte d'ailleurs de ce qui précède, l'invention ne se limite nullement à ceux de ses modes d'application et de réalisation qui ont été plus spécialement envisagés; elle en embrasse, au contraire, toutes les variantes.

Ainsi, au lieu de prévoir trois longueurs d'onde $l_1,l_2,l_3$, on pourrait mettre en oeuvre seulement deux longueurs d'onde $l_1$ et $l_3$ différentes, en prévoyant dans ce cas seulement deux émetteurs opto-électroniques $3_1,3_3$ dont les faisceaux sont mélangés par un seul miroir semi-transparent 6 (le miroir 5 étant supprimé), en prévoyant de même un seul miroir de séparation de faisceau, à savoir le miroir 18 (avec séparation du miroir 19), et en prévoyant enfin seulement deux lecteurs opto-électroniques $23_1$ et $23_3$, précédés de filtres $22_1$ et $22_3$ respectivement et de systèmes optiques $24_1$ et $24_3$ respectivement (les éléments $23_2,22_2$ et $24_2$ étant supprimés); dans le cas de mise en oeuvre de seulement deux longueurs d'onde, l'unité électronique 25 de traitement des signaux calcule, pour chaque lecture de position, le rapport entre la réponse du lecteur opto-électronique $23_3$ pour la longueur d'onde $l_3$ et la réponse du lecteur opto-électronique $23_1$ pour la longueur d'onde $l_1$.

**Revendications**

1. Codeur de repérage de position du type analogique, qui est constitué en trois parties, à savoir : un capteur de données (A) qui coopère avec l'élément (1) porteur du code de position; un module opto-électronique (C) avec une unité électronique (25) de traitement des signaux; et des moyens (B) de transmission optique bi-directionnelle à fibre(s) optique(s) entre le capteur et le module; et qui est caractérisé en ce que :
- l'élément (1) porteur de code comporte une bande (2) dont la transparence est sensiblement complète vis-à-vis d'au moins une longueur d'onde $(l_1,l_2)$, mais varie en fonction de la distance, angulaire ou linéaire, à partir d'une origine, pour une autre longueur d'onde $(l_3)$;
- ledit module opto-électronique (C) comprend:des moyens émetteurs opto-électroniques de lumière $(3_1,3_2,3_3)$ aptes à émettre au moins deux faisceaux de lumière $(7_1,7_2,7_3)$ à ladite au moins une et à ladite autre longueurs d'onde; des moyens lecteurs opto-électroniques à filtres optiques $(22_1-23_1, 22_2-23_2, 22_3-23_3)$, sensibles à ces longueurs d'onde et qui sont associés à l'unité de traitement électronique (25) afin que celle-ci traite les signaux électriques émis par ces moyens lecteurs opto-électroniques; des moyens (4) pour alimenter en énergie électrique lesdits moyens émetteurs opto-électroniques; deux coupleurs optiques(5, 6;18,19), le premier coupleur (5,6) permettant de mélanger les faisceaux de lumière $(7_1,7_2,7_3)$ émis par les moyens émetteurs opto-électroniques et de diriger l'ensemble (8) des faisceaux vers la première extrémité $(b_1)$ des moyens (B) de transmission optique bi-directionnelle à fibre(s) optique(s), tandis que le second coupleur (18,19) permet de diviser en au moins deux faisceaux $(20_1,20_2,20'_3)$ la lumière sortant par ladite première extrémité $(b_1)$ et de diriger ces faisceaux vers lesdits moyens lecteurs opto-électroniques $(22_1-23_1, 22_2-23_2, 22_3-23_3)$;
- ledit capteur (A) comprend un élément optique de renvoi (13), avec sa face d'entrée (13a) disposée du côté de l'élément (1) porteur de code opposé à celui qui est dirigé vers la seconde extrémité $(b_2)$ des moyens (B) de transmission optique bi-directionnelle à fibre(s) optique(s) et avec sa face de sortie (13d) dirigée vers ladite seconde face d'extrémité $(b_2)$, et
- l'unité électronique (25) de traitement des signaux calcule, pour chaque lecture de position, le rapport entre au moins une réponse desdits moyens lecteurs opto-électroniques pour ladite au moins une longueur d'onde ($l_1, l_2$) et la réponse desdits moyens lecteurs opto-électroniques pour ladite autre longueur d'onde ($l_3$).

2. Dispositif selon la revendication 1, caractérisé en ce que ladite au moins une longueur d'onde comprend une première ($l_1$) et une seconde ($l_2$) longueurs d'onde, ladite autre longueur d'onde ($l_3$) étant comprise entre les première et seconde longueurs d'onde, en ce que les moyens émetteurs opto-électroniques de lumière ($3_1, 3_2, 3_3$) émettent trois faisceaux de lumière ($7_1, 7_2, 7_3$) aux trois longueurs d'onde précitées ($l_1 l_2 l_3$), en ce que le premier coupleur (5,6) permet de mélanger ces trois faisceaux de lumière, en ce que le second coupleur (18,19) permet de diviser en trois faisceaux ($20_1, 20_2, 20'_3$) la lumière sortant par ladite première extrémité ($b_1$) et en ce que ladite unité électronique (25) calcule, pour chaque lecture de position, le rapport entre la moyenne des réponses desdits moyens lecteurs opto-électroniques pour la première ($l_1$) et la seconde ($l_2$) longueur d'onde et la réponse desdits moyens lecteurs opto-électroniques pour ladite autre longueur d'onde ($l_3$).

3. Codeur selon la revendication 1 ou 2, caractérisé en ce que les moyens (B) de transmission optique bi-directionnelle comprennent au moins deux fibres optiques distinctes (10,16), disposées la première (10) pour transmettre la lumière depuis le premier coupleur optique (5,6) vers l'élément (1) porteur de code et la seconde (16) pour transmettre la lumière depuis la face de sortie (13d) de l'élément optique de renvoi (13) vers le second coupleur optique (18,19).

4. Codeur selon la revendication 3, caractérisé en ce qu'il comprend en outre un système optique (28) opérant la conjugaison optique entre la face de sortie (10b) de la première fibre optique (10) et la face d'entrée (16a) de la seconde fibre optique (16).

5. Codeur selon l'une quelconque des revendications 2 à 4, caractérisé en ce que les coupleurs optiques sont constitués chacun par deux miroirs semi-transparents (5,6;18,19) possédant chacun, à l'inclinaison d'incidence choisie, une réflexion maximale pour l'une desdites trois longueurs d'onde - différente pour les deux miroirs - et une transmission maximale pour les deux autres desdites longueurs d'onde.

6. Codeur selon la revendication 5, caractérisé en ce qu'il comprend en outre trois condenseurs optiques ($27_1, 27_2, 27_3$) disposés sur le trajet des trois faisceaux optiques ($7_1, 7_2, 7_3$) entre les moyens émetteurs opto-électroniques ($3_1, 3_2, 3_3$) et le premier coupleur optique pour que les deux miroirs (5,6) de ce premier coupleur optique reçoivent ces trois faisceaux sous forme de rayons sensiblement parallèles.

7. Codeur selon la revendication 5 ou 6, caractérisé en ce qu'il comprend en outre un système optique (29) disposé entre la face de sortie ($b_1$ 16b) des moyens (B) de transmission optique bi-directionnelle et le second coupleur optique afin de focaliser la lumière en provenance de cette face de sortie pour que les deux miroirs (18,19) de ce second coupleur reçoivent cette lumière sous forme de rayons sensiblement parallèles.

8. Codeur selon l'une quelconque des revendications 1 à 7, caractérisé en ce que lesdits moyens émetteurs opto-électroniques de lumière ($3_1, 3_2, 3_3$) comprennent au moins deux émetteurs opto-électroniques émettant chacun un des faisceaux de lumière ($7_1, 7_2, 7_3$) auxdites au moins une et autre longueurs d'onde précitées ($l_1, l_2, l_3$).

9. Codeur selon l'une quelconque des revendications 1 à 7, caractérisé en ce que lesdits moyens émetteurs opto-électroniques de lumière ($3_1, 3_2, 3_3$) sont constitués par un unique émetteur opto-électronique de lumière émettant de la lumière dans une large bande de longueurs d'onde incluant lesdites au moins une et autre longueurs d'onde ($l_1, l_2, l_3$) et au moins deux filtres optiques sélectionnant lesdites longueurs d'onde.

10. Codeur selon l'une quelconque des revendications précédentes, caractérisé en ce que lesdits moyens lecteurs opto-électroniques à filtres optiques comprennent au moins deux lecteurs opto-électroniques ($23_1, 23_2, 23_3$) et au moins deux filtres optiques ($22_1, 22_2, 22_3$) qui sélectionnent chacun une des longueurs d'onde, un de ces filtres étant disposé devant chacun des lecteurs opto-électroniques.

11. Codeur selon l'une quelconque des revendications précédentes, caractérisé en ce qu'il comprend en outre un système optique (9) disposé entre le premier coupleur optique (5,6) et les moyens de transmission optique bi-directionnelle (B) pour focaliser l'ensemble (8) des faisceaux optiques envoyés par ce premier coupleur sur la première extrémité ($b_1$;10a) de ces moyens de transmission (B).

12. Codeur selon l'une quelconque des revendications précédentes, caractérisé en ce qu'il comprend en outre un système optique ($24_1, 24_2, 24_3$) disposé entre le second coupleur optique (18,19) et les moyens lecteurs opto-électroniques pour focaliser les faisceaux de lumière ($20_1, 20_2, 20'_3$) sur lesdits moyens lecteurs opto-électroniques.

FIG.1.

0222655

FIG.2.

FIG.3.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X,Y | AUTOMATISIERUNGSTECHNISCHE PRAXIS A.T.P., vol. 27, no. 4, avril 1985, pages 178-183, Munich, DE; R. ULRICH: "Faseroptische Wegaufnehmer als Grundelemente für Sensoren" * Figures 7,8; page 178, paragraphe 1 - page 179, paragraphe 4 * | 1-5,7, 9-11 | G 01 D   5/34 G 01 D   5/26 |
| X,Y | FR-A-2 427 584  (ASEA AB) * Titre; figures 1,1A; page 3, lignes 10-39; page 4, lignes 12-24 * | 1 | |
| X | GB-A-2 054 995  (THE MARCONI CO.) * Figures 1,2; titre; page 1, ligne 112 - page 2, ligne 74 * | 1-3 | |

|  |
|---|
| **DOMAINES TECHNIQUES RECHERCHES (Int. Cl.4)** |
| G 01 D |

Le présent rapport de recherche a été établi pour toutes les revendications

| Lieu de la recherche | Date d'achèvement de la recherche | Examinateur |
|---|---|---|
| LA HAYE | 04-02-1987 | VISSER F.P.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82